# EUROPEAN PATENT APPLICATION

(11) **EP 4 538 331 A1**
(43) Date of publication of application: **16.04.2025**
(21) Application number: 23386093.1
(22) Date of filing: 09.10.2023
(51) Int. Cl.: C09D 5/00

(54) **THERMAL ANTENNAE**

(71) Applicant: UCL Business Ltd, London WC1E 6BT (GB)
(72) Inventor: The designation of the inventor has not yet been filed
(74) Representative: Barker Brettell LLP

(57) **Abstract**

The invention relates to the use of a structure for passive thermoregulation. The structure is formed of a material having a phase transition temperature T_{C}, and the phase transition may be an insulator to metal phase transition, or an insulator to semi-metal phase transition. The thermal emissivity ε of the structure at a wavelength λ is greater at a temperature exceeding T_{C} than at a temperature below Tc. The structure has a characteristic length Lc, and the surface area:volume ratio of the structure is greater than 10/Lc.

## Description

The invention relates generally to antennae for passive thermoregulation. More particularly, the invention relates to antennae for passive thermoregulation which undergo emissivity switching during an insulator-to-metal phase transition.

### Background

Self-adaptive thermoregulation is the mechanism living organisms use to maintain a stable body temperature against the thermal fluctuations of their surroundings. Researchers have long sought to imitate this mechanism to dynamically balance heat influx and outflux in their systems to dampen detrimental temperature swings.

An efficient way to regulate the temperature of a surface is by controlling the amount of heat it radiates. In that respect, both passively and actively controlled radiators have been developed, whose emissive power is tuned by an external stimulus. In this context, "passive" refers to a process not requiring manual control or input.

Much of the work on passive thermoregulation systems has focused on materials which undergo a temperature-driven insulator-to-metal phase change. Such materials are often referred to as "thermochromic". For clarity, throughout this specification the term "thermochromic" is not intended to exclusively refer to materials which undergo an emissivity change in the visible light spectrum in response to a temperature change. Herein, "thermochromic" is intended to refer to materials whose emissivity changes in response to a temperature change and, more specifically, "thermochromic" is intended to refer to materials whose emissivity changes within the infrared range in response to a temperature change.

For self-adaptive radiators, thermochromism can be exploited to achieve a sharp contrast in emissivity profile around the transition temperature *Tc,* with low emissivity at the cold/insulator phase and high emissivity at the hot/metallic phase. The design variable to maximize is the hot-to-cold emissivity contrast Δ*ε* = *ε*_{H} - *ε*_{C} (where *ε*_{H}/_{C} = emissivity at temperatures above/below the transition temperature). Markedly, when Δ*ε* > 0 (positive differential) passive thermoregulation can be achieved.

When Δ*ε* < 0 on the other hand (negative differential), radiative heat losses may stay constant, or even be reversed as the temperature increases. The apparent temperature of a surface, recorded by an infrared camera for example, may then be decoupled from its real temperature, creating a thermal camouflage effect.

Prevalent in the literature is a thermo-response emitter design based on Fabry-Perot cavities, formed by an infrared transparent spacer sandwiched between a subwavelength thermochromic coating and a back reflector. Above the transition temperature, the thermochromic coating reaches the metallic phase, inducing cavity modes that result in high emissivity. The effect vanishes in the cold/insulator phase, leading again to Δ*ε* > 0. Metasurface concepts based on the Fabry-Perot mechanism have also been proposed.

Departing from the state-state-of-the-art, other less explored techniques include particle metasurfaces and particle composites.

Although Fabry-Perot or metasurface designs have been successfully demonstrated experimentally, the majority of these concepts require specialized equipment and cleanroom environments that increase the final cost. Furthermore, their fabrication typically requires hard substrates (silicon, quartz, sapphire or other) or post-annealing steps to withstand the elevated temperatures during deposition, and to ensure uniformity across the whole area. However, permanently attached substrates impose constraints which make them incompatible with anything but planar surfaces.

The following has been devised with the foregoing issues in mind.

### Summary of invention

According to a first aspect of the invention, there is provided a use of a structure for passive thermoregulation. The structure is formed of a material having a phase transition temperature T_{C}. The thermal emissivity ε of the structure at a wavelength λ is greater at a temperature exceeding T_{C} than at a temperature below T_{C}.

The structure may have a characteristic length Lc. Herein, the term "characteristic length" refers to the largest dimension of the structure. For example, the characteristic length of a sphere would be its diameter.

The structure may have a surface area:volume ratio greater than 6/Lc. The structure may have a surface area:volume ratio greater than 7/Lc. The structure may have a surface area:volume ratio greater than 8/L_{C}. The structure may have a surface area:volume ratio greater than 10/Lc. The structure may have a surface area:volume ratio greater than 11/L_{C}. The structure may have a surface area:volume ratio greater than 12/Lc. The structure may have a surface area:volume ratio greater than 15/L_{C}. The structure may have a surface area:volume ratio greater than 20/Lc The structure may have a surface area:volume ratio greater than 30/Lc. The structure may have a surface area:volume ratio greater than 50/Lc.

The structure may be non-spherical.

Having a high surface area:volume ratio may increase the emissivity contrast for the structures, thus enabling a greater rate of heat loss through thermal radiation.

The material may be configured to undergo an insulator to metal phase transition, or an insulator to semi-metal phase transition, at the phase transition temperature T_{C}. The material may be configured to undergo a semiconductor to metal phase transition, or a semiconductor to semi-metal phase transition, at the phase transition temperature T_{C}.

The phase transition temperature T_{C} may be between 0-100°C. The phase transition temperature Tc may be between 20-80°C.

The wavelength λ for which the thermal emissivity changes may be in the mid infrared range. The wavelength λ for which the thermal emissivity changes may be between 1-40µm. The wavelength λ for which the thermal emissivity changes may be between 8-13µm. The wavelength λ for which the thermal emissivity changes may be between 3-5µm. The wavelength λ for which the thermal emissivity changes may be in the atmospheric infrared window.

The wavelengths referred to herein are the wavelengths in the atmosphere where the refractive index n~1.

Having the emissivity change at a wavelength within the infrared range enables the radiation of heat from the structure. Having the emissivity change at a wavelength within the atmospheric infrared window ensures that the heat travels long distances from the structure rather than providing heating of nearby air.

The characteristic length of the structure may be between λ/8 and λ. The characteristic length of the structure may be between λ/6 and λ.

The structure may be embedded within a medium having a refractive index with real component nᵢ. The characteristic length of the structure may be between λ/8nᵢ and λ/nᵢ. The characteristic length of the structure may be between λ/6nᵢ and λ/nᵢ.

Having the structure length on the scale of the wavelength of infrared radiation may enable the structure to act as an antenna and provide a greater emissivity contrast for wavelengths within the infrared range.

The wavelength for the peak emissivity contrast may be dependent on the length of the structure.

The structure may have the shape of a rod. For a rod, the characteristic length is the length of the rod.

The rod may have a length less than 25µm. The rod may have a length less than 20µm. The rod may have a length less than 15µm. The rod may have a length less than 10µm. The rod may have a length less than 5µm.

The rod may have a width less than 1µm. The rod may have a width less than 800nm. The rod may have a width less than 600nm. The rod may have a width less than 400nm. The rod may have a width less than 200nm. The rod may have a width less than 100nm.

The structure may have the shape of a star.

The structure may have the shape of a flake. For flakes, the characteristic length is the length of the sides.

The material may be one of: a metal-oxide, a chalcogenide, or a perovskite. The material may be vanadium-dioxide.

The structure may have a peak emissivity contrast, Δε = ε_{H} - ε_{C}, of at least 0.4. The structure may have a peak emissivity contrast, Δε = ε_{H} - ε_{C}, of at least 0.5. The structure may have a peak emissivity contrast, Δε = ε_{H} - ε_{C}, of at least 0.55. The structure may have a peak emissivity contrast, Δε = ε_{H} - ε_{C}, of at least 0.6. The structure may have a peak emissivity contrast, Δε = ε_{H}, - ε_{C}, of at least 0.7.

The structure may have an absorption cross section hot:cold ratio greater than 10 for the wavelength λ. The structure may have an absorption cross section hot:cold ratio greater than 20 for the wavelength λ. The structure may have an absorption cross section hot:cold ratio greater than 50 for the wavelength λ. The structure may have an absorption cross section hot:cold ratio greater than 100 for the wavelength λ.

According to a second aspect of the invention, there is provided a use of a composite for passive thermoregulation. The composite comprises a plurality of structures formed of a material having a phase transition temperature T_{C}. The emissivity ε of the composite at a wavelength λ is greater at a temperature exceeding Tc than at a temperature below Tc.

The structures may be the structures of the first aspect of invention.

The composite may comprise a medium surrounding the antennae. The antennae may be embedded within the medium. The medium may have a real component of refractive index nᵢ.

The composite may comprise polymeric material. The composite may comprise polyethylene. The polymeric material may be the medium surrounding the antennae.

The wavelength λ for which the thermal emissivity of the composite changes may be in the mid infrared range. The wavelength λ for which the thermal emissivity of the composite changes may be between 1-40µm. The wavelength λ for which the thermal emissivity of the composite changes may be between 8-13µm. The wavelength λ for which the thermal emissivity of the composite changes may be between 3-5µm. The wavelength λ for which the thermal emissivity of the composite changes may be in the atmospheric window.

The structures may have a characteristic length Lc. The structures may have an average characteristic length Lc.

The average characteristic length of the structures may be between λ/8 and λ. The average characteristic length of the structure may be between λ/6 and λ. The average characteristic length of the structure may be between λ/8nᵢ and λ/nᵢ. The average characteristic length of the structure may be between λ/6nᵢ and λ/nᵢ.

The structures may have an average surface area:volume ratio greater than 6/Lc. The structures may have an average surface area:volume ratio greater than 8/L_{C}. The structures may have an average surface area:volume ratio greater than 10/Lc. The structures may have an average surface area:volume ratio greater than 11/L_{C}. The structures may have an average surface area:volume ratio greater than 12/Lc. The structures may have an average surface area:volume ratio greater than 15/L_{C}. The structures may have an average surface area:volume ratio greater than 20/Lc The structures may have an average surface area:volume ratio greater than 50/Lc.

The combined volume of structures within the composite may account for less than 5.5% of the volume of the composite (i.e., The fractional volume of the structures within the composite may be less than 5.5%). The combined volume of structures within the composite may account for less than 2.5% of the volume of the composite. The combined volume of structures within the composite may account for less than 1% of the volume of the composite.

The composite may comprise at least two different types of structure. The two types of structure may have different shapes. The two types of structure may have different dimensions. The two types of structure may have different characteristic lengths. The different structure types may have different peak emissivity contrast wavelengths.

The wavelength for the peak emissivity contrast of the composite may be dependent on the length of at least one of the different types of structure.

The composite may be a film. The composite may be a polymer film. The composite may comprise a reflective film on one side of the composite.

According to a third aspect of the invention, there is provided a use of a composite for thermal camouflage. The composite comprises a plurality of structures formed of a material having a phase transition temperature Tc. The emissivity εₕ of the composite at a wavelength λ is greater at a temperature below T_{C} than at a temperature exceeding T_{C}.

The structures may be the structures according to the first aspect of the invention.

Optional features of any of the above aspects may be combined with the features of any other aspect, in any combination. For example, features described in connection with the structures of the first aspect may have corresponding features definable with respect to the composite of the second aspect, and vice versa, and these embodiments are specifically envisaged. Features which are described in the context or separate aspects and embodiments of the invention may be used together and/or be interchangeable wherever possible. Similarly, where features are, for brevity, described in the context of a single embodiment, those features may also be provided separately or in any suitable sub-combination.

### Brief description of the drawings

The invention will now be described, by way of example only, with reference to the accompanying drawings, in which:
**Figure 1** shows a schematic view of a process for fabricating a passive thermoregulation composite according to the present invention;
**Figure 2** shows a scanning electron microscope (SEM) image of VO₂ antennae formed using hydrothermal synthesis;
**Figure 3** shows a composite in accordance with an embodiment of the present invention;
**Figure 4** shows the measured and simulated emissivity of a composite with an aluminium back reflector at a temperature above the transition temperature and at a temperature below the transition temperature;
**Figure 5** shows the measured emissivity at a wavelength λ=10µm of a composite during a heating and cooling cycle;
**Figure 6** shows thermal camera images of carbon black (*ε* ≈ 1), aluminium (*ε* ≈ 0), and a thermochromic composite, when they are each heated from 40°C to 95°C;
**Figure 7** shows the simulated emissivity contrast of a composite as a function of the absorption cross-section hot:cold ratio;
**Figure 8** shows the simulated absorption cross section hot:cold ratio of a VO₂ sphere as a function of the sphere's diameter;
**Figure 9** shows the simulated absorption cross section hot:cold ratio of a VO₂ ellipsoid as a function of the surface-area to volume (SA:V) ratio;
**Figure 10** shows the simulated absorption cross section hot:cold ratio of a rod as a function of wavelength for different rod lengths;
**Figure 11** shows the simulated absorption cross section hot:cold ratio of a rod as a function of wavelength for different rod widths;
**Figure 12** shows the simulated absorption cross section hot:cold ratio for a VO₂ rod at a wavelength of 10µm as a function of the rod's length and width;
**Figure 13** shows the simulated emissivity of a VO₂ rod composite as a function of the antennae fractional volume, at a temperature above the transition temperature and at a temperature below the transition temperature, considering both optimum and conservative rod dimensions;
**Figure 14** shows the emissivity of a VO₂ rod composite as a function of the coefficient of variation of particle size distribution, at a temperature above the transition temperature and at a temperature below the transition temperature, considering both optimum and conservative rod dimensions;
**Figure 15** shows computational models and an SEM image of VO₂ stars obtained using hydrothermal synthesis;
**Figure 16** shows the emissivity of a thermochromic composite comprising VO₂ stars as a function of wavelength at a temperature above the transition temperature and at a temperature below the transition temperature;
**Figure 17** shows the simulated absorption cross section hot:cold ratio for a VO₂ star;
**Figure 18** shows the simulated scattering and absorption cross sections of a VO₂ star at a temperature above the transition temperature and at a temperature below the transition temperature;
**Figures 19(a)****-(e)** show the shapes and dimensions of antennae used for the emissivity simulations of Figures 20-22;
Figure 20 shows the simulated absorption cross section hot:cold ratio for each antenna type;
Figure 21 shows the normalized simulated scattering and absorption cross-sections of each antenna type at a wavelength of 10µm; and
Figure 22 shows the simulated emissivity of composites comprising each antenna type at a wavelength of 10µm at temperatures above and below the transition temperature.

### Detailed description

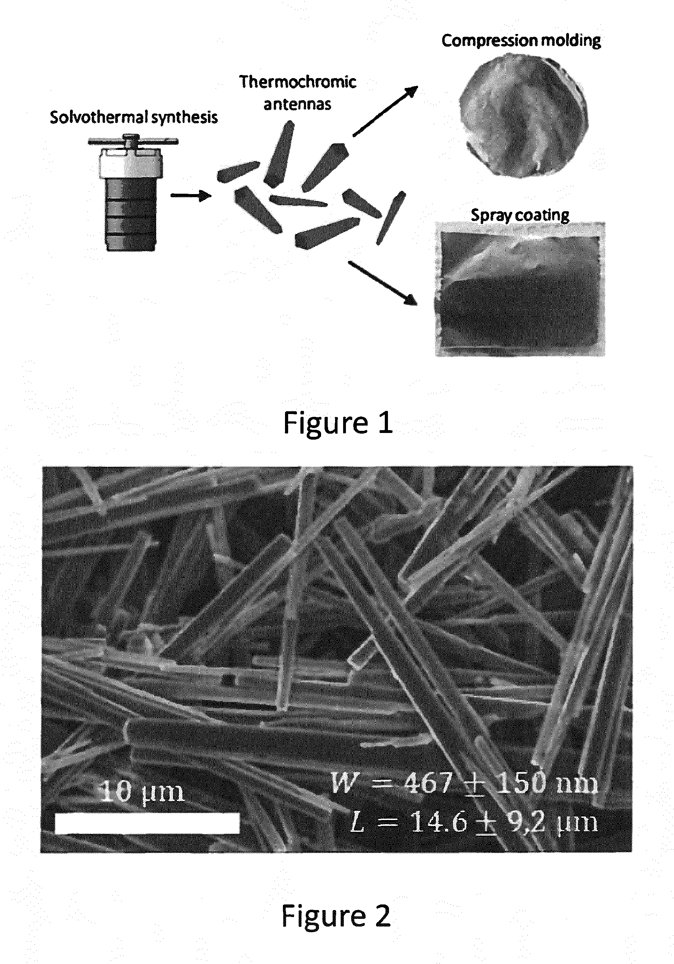

Figure 1 shows a schematic for fabrication of structures in accordance with some embodiments of the invention and fabrication of composites comprising said structures.

Firstly, the structures (also referred to herein as "antennae") are synthesized. In some embodiments, the antennae are synthesised via hydrothermal synthesis.

In some embodiments, the antennae are Vanadium dioxide (VO₂) antennae. In some embodiments, the antennae are VO₂ rods.

In one embodiment, VO₂ rods are synthesized by a process in which 0.48g of V₂O₅ is dispersed in 10mL of deionized water with continuous magnetic stirring to form a yellow suspension. 0.75mL of H₂SO₄ is then added while heating the suspension at 80°C. After 15 min, 270µL of hydrazine hydrate N₂H_{2.}H₂O is slowly added to the mixture to form a transparent blue solution, indicating the reduction of V5+ to V4+. With vigorous stirring, 1.8mL of CTAB (0.1M) is added and the solution kept stirring for 1 hour. The pH of the resulting solution is then adjusted to 4.0-4.2 by adding NaOH (1M) dropwise. The brown precipitate is washed with water three times using a centrifuge and re-dispersed in 19mL of water and transferred to a 45mL Teflon Autoclave (Parr acid digestion vessel). Hydrothermal reaction is then carried out at 220°C degree for 63 hours. The final black precipitate is then collected by centrifugation, washed with ethanol, and dried at 80°C for 1 hour. Thermal transformation of VO2(A) to VO2(M) is then carried out in a vacuum tube furnace at 550C, 0.2 mbar for 1 hour. Figure 2 shows a scanning electron microscope (SEM) image of VO₂ rods formed using the method of this embodiment.

The skilled person will recognise that this is merely one example of how to synthesise VO₂ rods, and alternative methods can be used.

In other embodiments, the VO₂ antennae are VO₂ stars. In some such embodiments, synthesis of VO₂ stars is performed through a similar hydrothermal process to that described above, except with higher hydrazine concentration (330µL) and higher reaction temperature (235°C degree for 63 hour). These reaction conditions lead to the formation of VO2 (M) micro stars which can be collected by centrifugation, washed with ethanol, and dried at 80°C for 1hour.

The skilled person will recognise that the synthesis methods described above in relation to synthesis of VO₂ stars are provided by way of example only, and that alternative methods can be used.

After the antennae are synthesised, composites are formed. In some embodiments, thermochromic polymer films are formed by mixing the antennae with polymers and then hot pressing the mixture onto a film. Alternatively, in other embodiments, thermochromic paints can be formed which can be spray coated onto a surface. In some embodiments, fibre extrusion or injection moulding processes can be used to form the composite. In other embodiments, films, coatings, and other composites can be formed from the antennae using known standard processes.

In one embodiment, a VO₂ polymer composite is formed by mixing a known amount of VO₂ (M) micro rods or micro stars (0.002g-0.02g) with 0.8g LDPE and 0.01g of antioxidant (IRGANOX) through solid grinding. This mixture is then poured between aluminium plates and subjected to compress moulding at 180°C, 350 bar for 3 minutes.

In another embodiment, a VO₂ composite spray coating is formed by grinding up VO2 powder using a mortar and pestle and mixed with acetone to prepare a 2wt.% suspension. The mixture is then left in an ultra-sonication bath for 4 hours to achieve a homogenous suspension. Afterwards, the suspension is sprayed onto aluminium foil using a spray gun (DeVilbiss DAGR Airbrush, Fluid tip: 0.35mm, Operating pressure: 1.3 - 3.5 bar, 10 ml suspension for 2 ×2 cm2 sample) from 15cm at an angle of 45°. The temperature of the aluminium substrate is maintained at 50_{°}C to ensure the rapid evaporation of any residual solvent and the formation of a smooth film. Finally, the composite samples are prepared by dip-coating the spray-coated VO2 film in 2wt% polyethylene solution in Toluene.

In other embodiments, the antennae are formed from, or comprise, a metal-oxide, a chalcogenide, or a perovskite. In some embodiments, the antennae are formed from, or comprise, any other thermochromic material. In some embodiments, the antennae can be formed from, or comprise, any material which undergoes a phase change (insulator-to-metal; insulator-to-semimetal; semiconductor-to-metal; or semiconductor-to-semimetal) to provide an emissivity change.

The following is a list of thermochromic materials from which the antennae may be formed: V₈O₁₅, Fe₃O₄, VO, V₅O₉, PrNiO₃, V₆O₁₃, V₂O₃, V₆O₁₁, NdNiO₃, V₄O₇, perovskites, VO₂, SmNiO₃, GST, Ti₃O₅, LaCoO₃, Ti₂O₃, and NbO₂.

The materials listed above are provided by way of example only and form a non-exhaustive list.

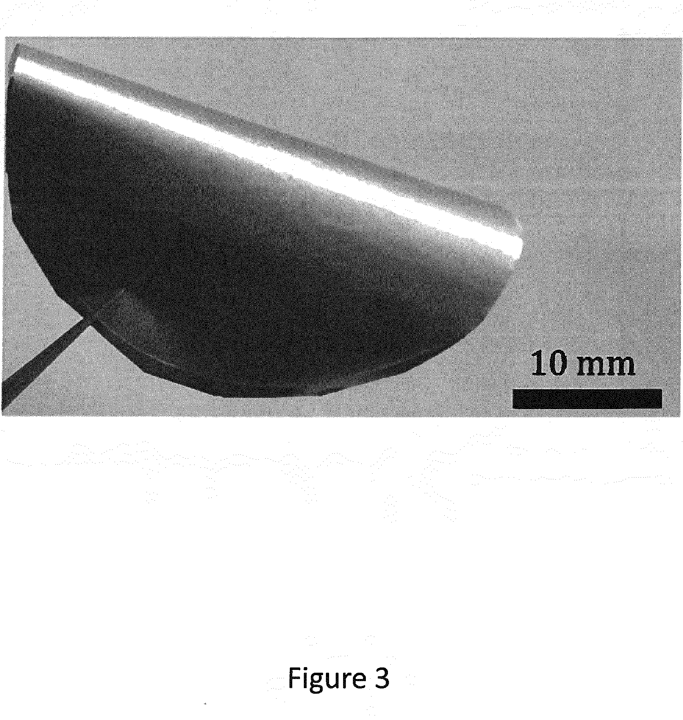

Figure 3 shows an embodiment of a composite film formed using the method of Figure 1. The flexible, passive thermoregulation composite film was fabricated by hot-pressing a dry mix of high-density polyethylene (HDPE) powder and VO₂ antennae (total volume of the VO₂ antennae occupying 0.55% of the mixture volume) over an aluminium film, the aluminium film acting as a back reflector to prevent radiative thermal exchange with the underlying body.

The antennae used to create the film are VO₂ rods with uniform morphology, with a width (W) × length (L) size distribution of 0.47 ± 0.01 µm × 14.6 ± 9.2 µm. VO₂ has an insulator-to-metal transition temperature, T_{C} = 68°C.

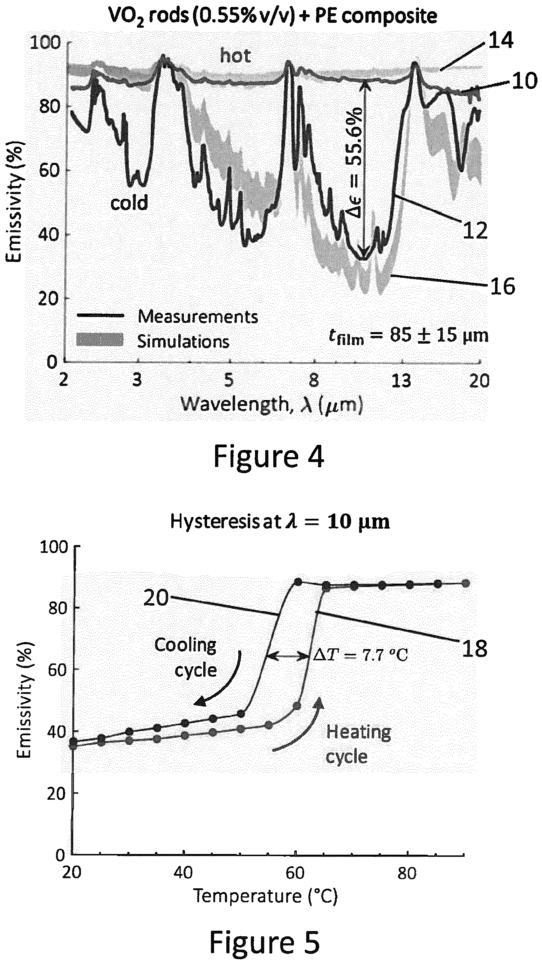

Figure 4 shows the measured emissivity, between wavelengths λ of 2-20µm, of the composite of Figure 3. The emissivity was measured using Fourier Transform Infrared spectroscopy. Line 10 shows the measured emissivity for a temperature greater than T_{C.} Line 12 shows the measured emissivity for a temperature less than T_{C.}

The filled areas 14, 16 correspond to the results from simulations performed to estimate the emissivity at temperatures above and below T_{C} respectively.

As shown in Figure 4, the composite film exhibits a dramatic emissivity switching at a wavelength λ = 10.5µm, from *ε*_{C} = 32.7% to *ε*_{H} = 88.3%. Therefore, the emissivity contrast Δ*ε* = 55.6%. The emissivity measurements above and below the transition temperature, T_{C}, were taken at 90°C and 22°C respectively. The emissivity changes sharply at the transition temperature, T_{C}. The emissivity remains approximately constant as the temperature increases beyond T_{C} and as the temperature decreases below T_{C}. The emissivity contrast Δ*ε* would not change significantly if the upper and lower temperatures were changed to values which are different from 90°C and 22°C, provided that the temperatures are either side of the transition temperature T_{C}.

Although the composite in the present embodiment has a transition temperature T_{C} = 68°C, in other embodiments the composite can have any other transition temperature.

For example, in some embodiments, the transition temperature may be at room temperature (approximately 22°C).

Figure 5 shows the measured emissivity of the composite, at a wavelength λ = 10µm, as a function of temperature, during a heating and a cooling cycle. Line 18 shows the emissivity vs temperature during the heating cycle. Line 20 shows the emissivity vs temperature during the cooling cycle. There is a hysteresis width of 7.7°C between the heating and cooling cycles.

The emissivity switching of the composite, as shown in Figures 4 and 5, is solely attributed to the response of the thermochromic antennae.

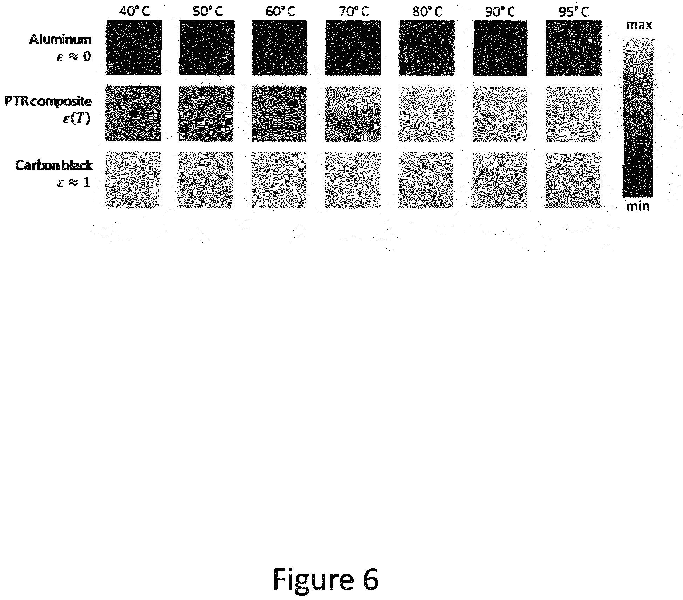

To further assess the emissivity switching, the composite was imaged using a Long-wave infrared (LWIR) camera against a reference with constant *ε* ≈ 0% (aluminium) and another reference with ε ≈ 100% (Carbon black). Thermal camera images of carbon black (*ε* ≈ 1), aluminium (*ε* ≈ 0) and the thermochromic composite, at temperatures ranging from 40°C to 95°C, are shown in Figure 6. At each temperature, the scalebar is normalized to the maximum and minimum temperatures. There is a clear visible change in the emissivity of the composite around temperature T ~ 70°C, evidencing the transition.

A design parameter which can be used to optimize the response of the passive thermoregulation composite is the antennas' absorption cross section hot:cold ratio, Cabs,h/Cabs,c, where Cabs,h (Cabs,c) is the absorption cross section at the hot (cold) phase.

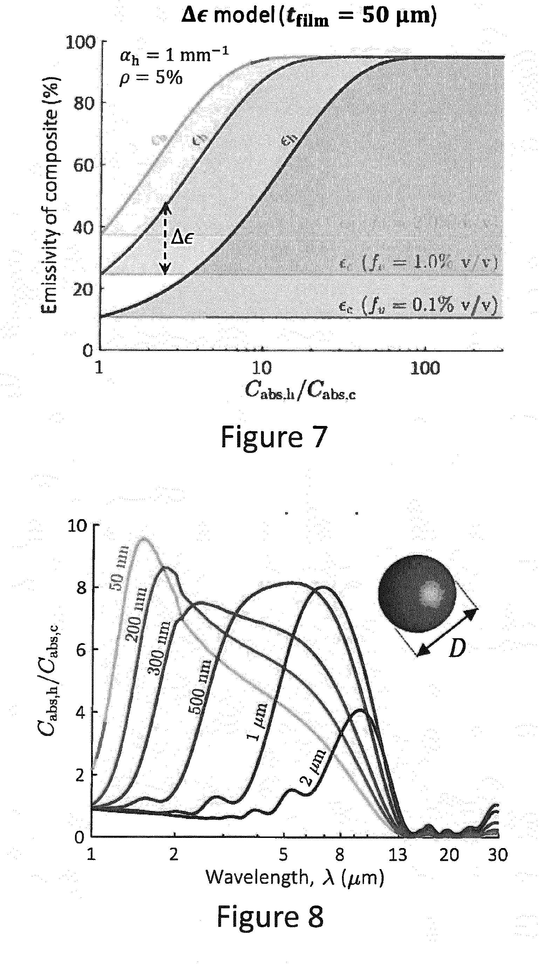

Figure 7 shows the relationship between the hot-to-cold emissivity contrast Δ*ε* and the absorption cross section hot:cold ratio at a wavelength λ = 10µm, which is based on a simplified model based on Beer-Lambert's law. The model evidences an absorption cross section hot:cold ratio threshold at which Δ*ε* does not increase any further, and this threshold is tied to the emissivity of the cold phase emissivity (*ε*_{C}). The lower the *ε*_{C}, the larger the absorption cross section hot:cold ratio needs to be to reach the threshold.

The relationship implies that VO₂ spheres, whose absorption cross section hot:cold ratio is bounded to less than 10, as shown in Figure 8, have a limited performance in thermochromic particle composites, with Δ*ε* < 55%. Figure 8 shows simulated absorption cross-section hot:cold ratios for spheres of various diameters as a function of wavelength. An absorption cross section hot:cold ratio refers to the ratio between the absorption cross section at a temperature above the transition temperature Tc and the absorption cross section at a temperature below the transition temperature Tc.

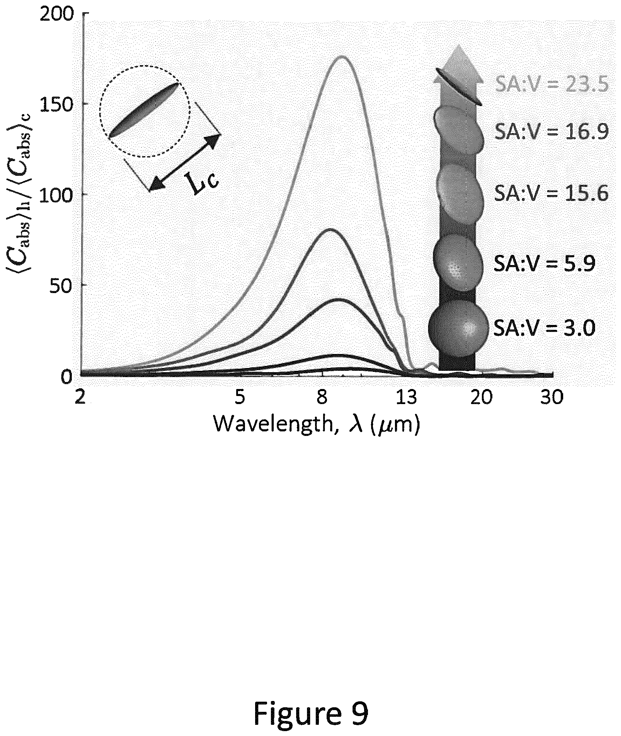

Figure 9 shows the simulated absorption cross section hot:cold ratios of VO₂ ellipsoids, each having different surface-area-to-volume (SA:V) ratios, as a function of wavelength. To generate the different ellipsoids, two of the three principal axes of a VO₂ ellipsoid are shrunk to the limit of a half-wavelength antenna, while the other axis is kept constant with a length Lc = 2 µm.

The simulations were performed for five different ellipsoids.

The first ellipsoid used in the simulation is a sphere, whose SA:V ratio = 6/Lc. L_{C} = 2µm), so the SA:V ratio is 3×10⁶.

For the second to fifth ellipsoids, the SA:V ratios are: 5.9×10⁶, 15.6×10⁶, 16.9×10⁶, and 23.5×10⁶.

The emissivity contrast is based on the orientation-averaged absorption cross section (Cabs), which represents the average absorption cross section of randomly-oriented particles in a composite. It is clear from Figure 9 that the absorption cross section hot:cold ratio increases as the SA:V ratio increases.

As described in relation to Figure 8, spheres are limited to having an absorption cross-section hot:cold ratio less than 10. It is clear from Figure 9 that ellipsoids with a SA:V ratio of 5.9×10⁶ or more can outperform spheres and have an absorption cross-section hot:cold ratio greater than 10.

From simulation data, ellipsoids with a SA:V ratio greater than 10/L_{C} significantly outperform spheres (whose SA:V ratio = 6/L_{C}).

Therefore, a strategy to maximize the absorption cross section hot:cold ratio (and therefore the emissivity contrast) is to increase the SA:V ratio of the antenna, which can lead to absorption cross section hot:cold ratios of up to 200 in the limit of rod antennae. For the VO₂ rods shown and described in relation to Figure 2, the SA:V ratio is approximately 35/Lc.

The enhancement with SA:V is explained below by analyzing the underlying mechanism behind dielectric and metallic resonators.

At the metallic/hot phase, an increase in SA:V restrict the degrees of freedom of free electrons, which commonly suppress non-radiative modes. As a result, the thermal energy in the hot antenna is predominately dissipated radiatively, and (Cabs,h) increases. This is further confirmed by mode decomposition analysis, which reveals that the contribution of dipole modes to the total absorption cross section dominates when SA:V increases.

In contrast, the absorption of the dielectric resonators is primarily governed by the behaviour of polarization currents, rather than free electrons. At wavelengths far from their intrinsic phonon polariton modes, cold-phase VO2 features weak polarization currents, and the absorption cross section remains almost proportional to the volume of the structure. For example, VO2 structures features (Cabs,c)/Vp ≈ 0.2 µm-1 at wavelengths λ between 5-13 µm, regardless of their SA:V ratio. Consequently, (Cabs,c) decreases inversely proportional to SA:V.

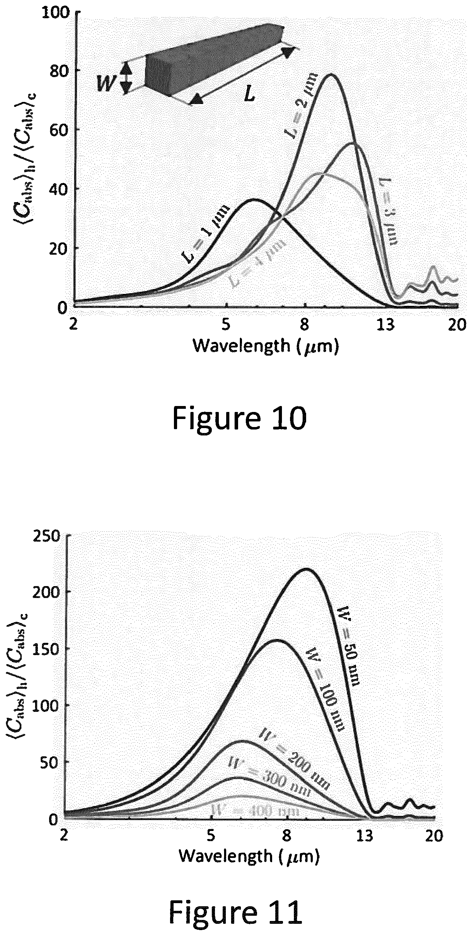

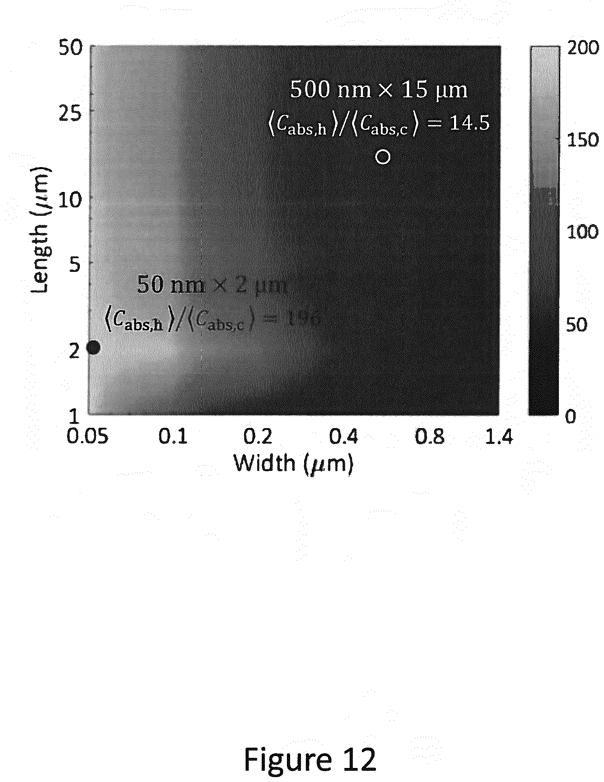

The absorption cross section hot:cold ratio of an antenna can be tuned by adjusting its width, W, and length, L. Figures 10 and 11 show the absorption cross section hot:cold ratio as a function of wavelength for various rod lengths (L) and rod widths (W), respectively. In Figure 10, the antenna width is fixed at 300nm whilst the length is varied. In Figure 11, the antenna length is fixed at 1µm whilst the width is varied. Figure 12 shows the absorption cross section hot:cold ratio for a VO₂ rod at λ = 10µm as a function of both width (W) and length (L).

Setting a target at λ = 10 µm, which corresponds to peak blackbody radiation at T = 300 °C, we identify that the largest emissivity ratio is reached for antennae with L ~ 2µm and W ≈ 50nm.

Another consideration when creating a composite is the fractional volume (*fv*) of the composite occupied by the antennae. The fractional volume *fv* refers to the percentage of the volume of the composite which is occupied by the combined volume of the antennae.

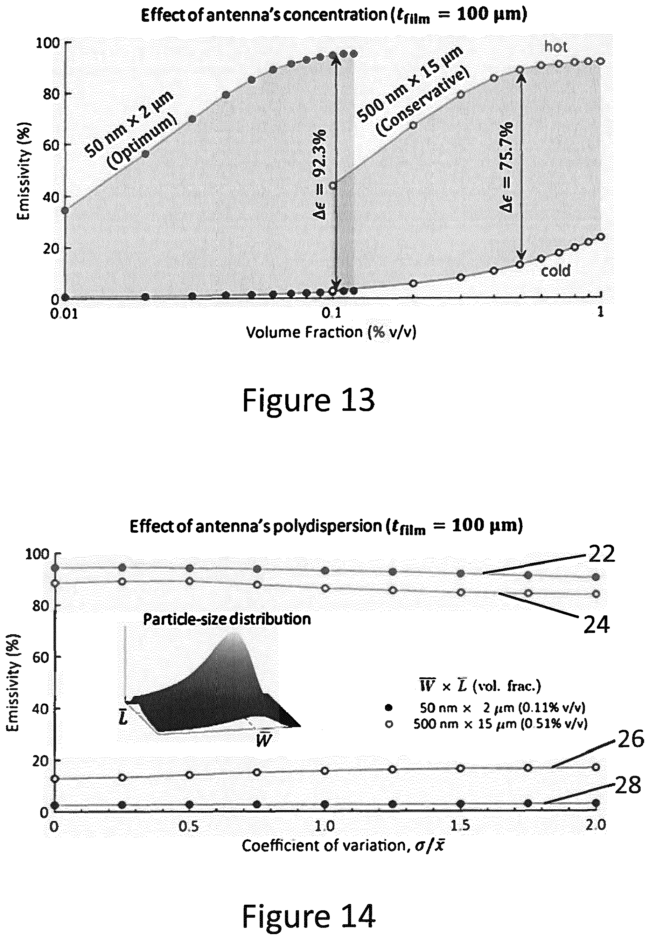

Figure 13 shows the emissivity of the composite at temperatures above and below the transition temperature as a function of *fv* based on first principle radiative transfer simulations. Both optimum rod dimensions (Length = 2µm, Width = 50nm) and conservative rod dimensions (Length = 15 µm, Width = 500 nm) are considered - filled circle data points on the left of the figure represent results for optimum rod dimensions, whilst open circle data points on the right of the figure represent results for conservative rod dimensions.

Figure 13 shows that the emissivity contrast of a composite comprising antennae having optimum dimensions and a transparent host with a thickness of 100µm can reach up to Δ*ε* = 92.3% at *fv* = 0.11% v/v. For a composite comprising antennae having conservative dimensions, this limit decreases to Δ*ε* = 75.7% at *fv* = 0.51% v/v.

Figure 14 shows the emissivity of a composite as a function of coefficient of variation of the distribution of the rod dimensions. Figure 14 shows the emissivity at temperatures above and below the transition temperature for both the optimum and conservative rod dimensions used in relation to Figure 13.

Line 22 represents the emissivity of a composite having antennae with optimum mean rod dimensions as a function of coefficient of variation, at a temperature above the transition temperature. Line 24 represents the emissivity of a composite having antennae with conservative mean rod dimensions as a function of coefficient of variation, at a temperature above the transition temperature. Line 26 represents the emissivity of a composite having antennae with optimum mean rod dimensions as a function of coefficient of variation, at a temperature below the transition temperature. Line 28 represents the emissivity of a composite having antennae with conservative mean rod dimensions as a function of coefficient of variation, at a temperature above the transition temperature.

Considering a normal particle-size distribution with a coefficient of variation of 2, Δ*ε* is reduced only by ~ 5% and 11% for the optimal and conservative scenarios, respectively. As such, the predicted emissivity contrast Δ*ε* shows very little sensitivity to polydispersion.

The emissivity contrast Δ*ε* of thermochromic antennae is also sensitive to their morphology (shape), which adds additional degrees of freedom to the design of passive thermoregulation composites.

Experimentally, the morphology of antennae can be tuned through the surfactant (CTAB) during the hydrothermal synthesis, by preferential adsorption on specific crystallographic facets. Other methods for synthesizing antennae are also possible.

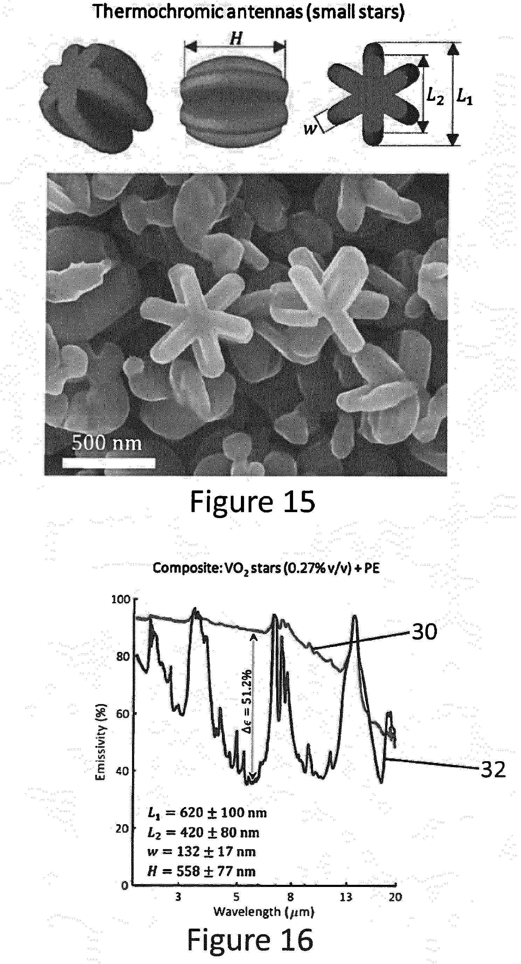

The technique above was used to synthesise VO₂ stars, an SEM image of which is shown in Figure 15. The morphology of the stars can be defined by four parameters (H, w, L₁, L₂), as shown in Figure 15. These stars were embedded into a polyethylene matrix film and the emissivity of the composite film was tested.

Figure 16 shows the measured emissivity of a composite comprising VO₂ stars as a function of wavelength at a temperature below Tc and at a temperature above T_{C}. Line 30 shows the emissivity of the composite at a temperature above T_{C}. Line 32 shows the emissivity of the composite at a temperature below Tc. The morphology of the stars within the composite is defined by the following parameter values: L₁ = 620 ± 100nm; L₂= 420 ± 80nm; w = 132 ± 17nm; H = 558 ± 77nm. The fractional volume *fv* = 0.27% for the antennae within the composite. The SA:V ratio for the stars is approximately 11/L_{C}.

As shown in Figure 16, the composite exhibits a maximum emissivity contrast Δ*ε* = 51.2% at a wavelength λ = 5.4µm. The wavelength for maximum Δ*ε* is blueshifted in comparison to the rod antennae. This is due to the smaller size of the stars. As discussed below, this is confirmed by simulations performed for a star antenna with similar dimensions to those in the sample composite.

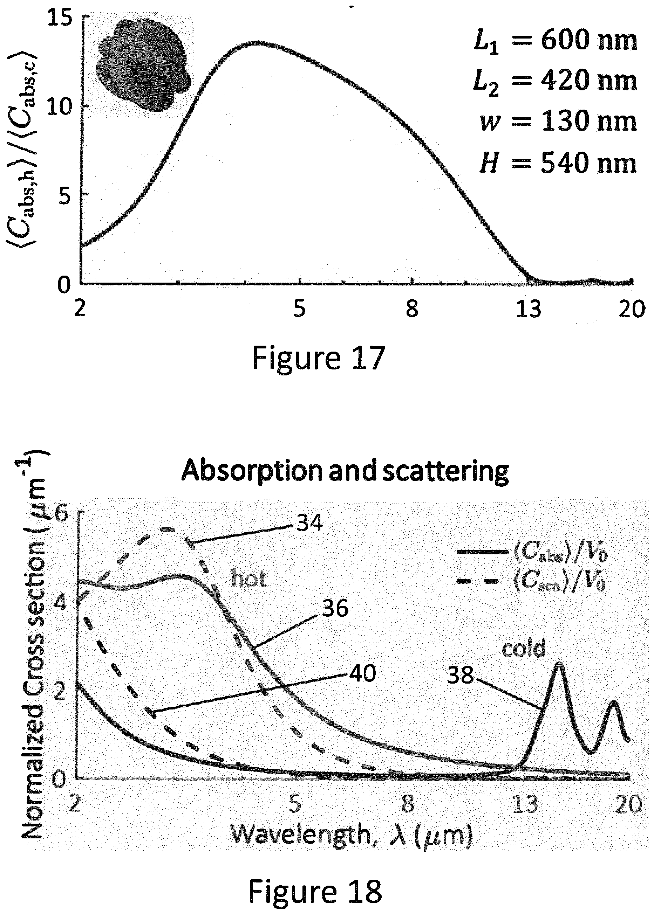

Figure 17 shows the simulation results for the absorption cross section hot:cold ratio of a star antenna having similar dimensions to the stars referred to in Figure 15 and 16.

Specifically, the morphology of the star antenna used in the simulation of Figure 17 is as follows: L₁ = 600nm; L₂ = 420nm; w = 130nm; H = 540nm. As shown in figure 17, the wavelength for the peak emissivity ratio in the simulations is consistent with the maximum Δ*ε* observed in experiments.

Figure 18 shows the simulated absorption and scattering cross-sections for the same star antenna as in Figure 17. Line 34 shows the normalised simulated scattering cross-section at a temperature above the transition temperature. Line 36 shows the normalised simulated absorption cross-section at a temperature above the transition temperature. Line 38 shows the normalised simulated absorption cross-section at a temperature below the transition temperature. Line 40 shows the normalised simulated scattering cross-section at a temperature below the transition temperature.

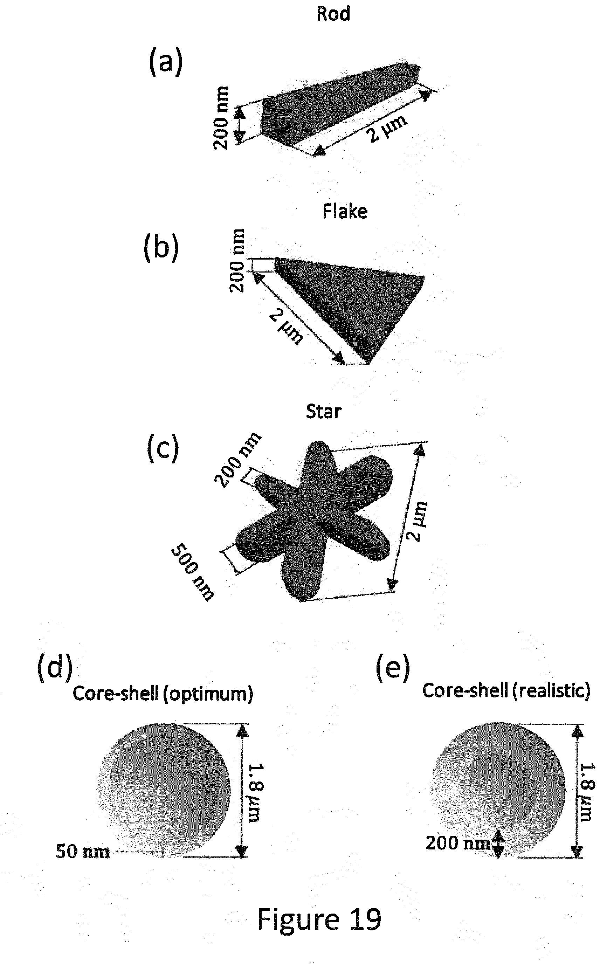

To further explore the role of morphology in the performance of the antennae and the composites, five morphologies were compared. Figure 19 shows the shape and dimensions of: (a) a rod; (b) a flake; (c) a star; (d) a first core-shell sphere; and (e) a second core-shell sphere.

The core-shell spheres comprise a VO₂ shell and a LWIR transparent core. The core-shells do not fall within the claimed scope of protection but are included to demonstrate the advantages of the present invention over the prior art.

The first core-shell is an optimum case, whose core-shell dimensions show the largest emissivity ratio at wavelength λ = 10µm. The second core-shell is a conservative case based on dimensions of CaF2/VO2 core/shell spheres grown by solvent/hydrothermal calcination.

All structures have a characteristic length *Lc* ≈ 2 µm, to ensure a peak in the emissivity ratio at a target wavelength of around λ = 10µm.

Simulation results performed using the antennae in Figures 19(a)-(e) are discussed below.

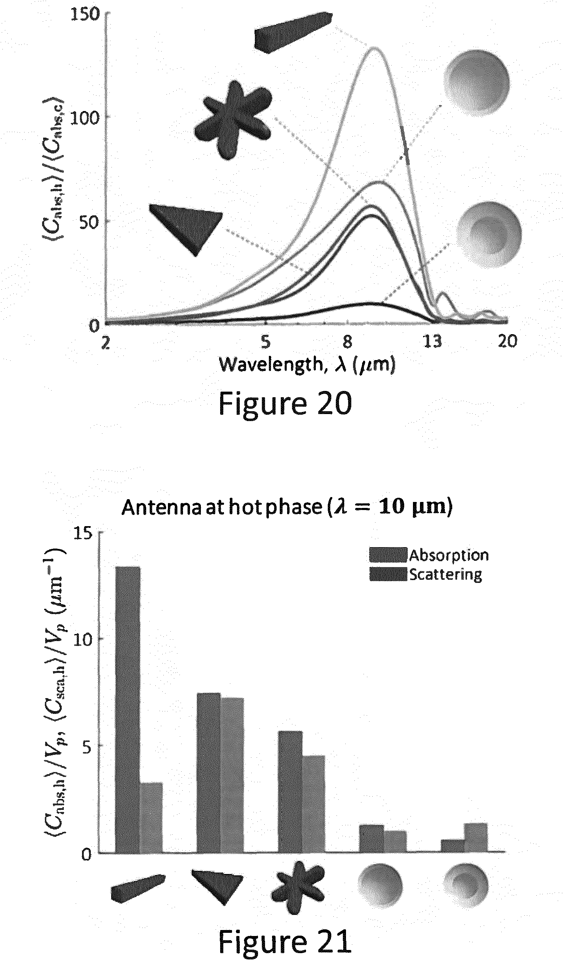

Figure 20 shows the absorption cross section hot:cold ratio of each antenna as a function of wavelength. The rod antenna shows the largest emissivity ratio, followed by the first core-shell spheres and the stars.

Figure 21 shows the normalized scattering and absorption cross-sections of the antennae at a wavelength λ = 10 µm, at a temperature above the transition temperature T_{C}. The rod antenna shows the largest difference between scattering and absorption. The scattering and absorption cross-sections for the core-shell antennae are significantly lower than for the antennae of the present invention.

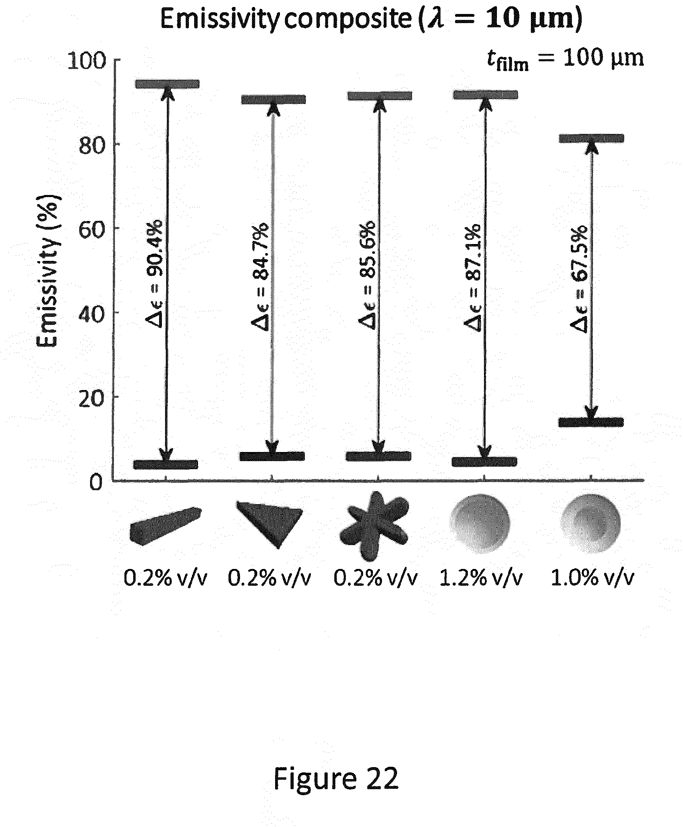

Scattering adds an additional degree of freedom to the design of thermochromic composites that can either enhance or reduce Δ*ε*. If scattering is smaller than absorption, multiple-scattering effects enhance *ε*_{H}. This is evidenced in Figure 22.

Figure 22 shows simulations for the emissivity of a composite above and below the transition temperature T_{C} at a wavelength λ = 10µm) In all the simulations, the refractive index of the host, *Nh* = 1.5. For core shell particles, the refractive index of the core, *Nc* = 1.5. The thickness of the film is taken to be = 100µm. The fractional volume *fv* is shown below each label on the x-axis. Each value of *fv* was selected according to the largest Δ*ε* for the relevant antenna at a wavelength λ= 10 µm.

The emissivity contract for rod antennae was the highest. The star and flake antennae achieved high emissivity contrast despite having low absorption cross section hot:cold ratios. This is due to the scattering effects.

However, if scattering is larger than absorption, *ε*_{H} becomes significantly reduced, as evidenced in the results of conservative core-shell spheres. In this case, scattering increases the reflectance of the composite, therefore reducing *ε*_{H}.

Figures 21 and 22 also evidence how a large absorption cross section hot:cold ratio enables a reduction in the concentration of antennae required to maximize Δ*ε*. In this regard, the first and second core-shell antennae composites require, at least, 5 times larger *fv* than the other morphologies due to their lowest absorption power. As such, the rod, flake and star antennae demonstrate a clear improvement over core-shell antennae for us in composites.

From reading the present disclosure, other variations and modifications will be apparent to the skilled person. Such variations and modifications may involve equivalent and other features which are already known in the art of thermoregulation, and which may be used instead of, or in addition to, features already described herein.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub-combination. The applicant hereby gives notice that new claims may be formulated to such features and/or combinations of such features during the prosecution of the present application or of any further application derived therefrom.

For the sake of completeness, it is also stated that the term "comprising" does not exclude other elements or steps, the term "a" or "an" does not exclude a plurality, and any reference signs in the claims shall not be construed as limiting the scope of the claims.

## Claims

1. The use of a structure for passive thermoregulation, the structure formed of a material having a phase transition temperature Tc;
wherein the thermal emissivity ε of the structure at a wavelength λ is greater at a temperature exceeding Tc than at a temperature below T_{C;}
wherein the structure has a characteristic length Lc, and the surface area:volume ratio of the structure is greater than 10/Lc.

2. The use of claim 1, wherein the material is configured to undergo an insulator to metal phase transition, or an insulator to semi-metal phase transition, at the phase transition temperature Tc.

3. The use of any preceding claim, wherein the wavelength λ is between 1-40µm.

4. The use of claim 3, wherein the wavelength λ is between 8-13µm.

5. The use of preceding claim, wherein the length of the structure is between λ/8 and λ.

6. The use of any preceding claim, wherein the structure has the shape of at least one of: a rod, a star, or a flake.

7. The use of any preceding claim, wherein the material is one of: a metal-oxide, a chalcogenide, or a perovskite.

8. The use of claim 7, wherein the material is vanadium-dioxide.

9. The use of any preceding claim, wherein the structure has a peak emissivity contrast Δε of at least 0.55.

10. The use of a composite for passive thermoregulation, the composite comprising a plurality of structures formed of a material having a phase transition temperature T_{C};
wherein the emissivity ε of the composite at a wavelength λ is greater at a temperature exceeding T_{C} than at a temperature below T_{C;}
wherein the structures have an average characteristic length Lc, and the average surface area:volume ratio greater than 10/Lc.

11. The use of claim 10, wherein the plurality of structures are embedded within a medium having a real component of refractive index nᵢ, and wherein the average characteristic length of the structure is between λ/8nᵢ, and λ/nᵢ,

12. The use of claim 10 or claim 11, wherein the combined volume of structures accounts for less than 1% of the volume of the composite.

13. The use of any of claims 10-12, wherein the composite comprises at least two different types of structure, wherein the different structure types have different peak emissivity contrast wavelengths.

14. The use of claim 10, wherein the peak emissivity contrast is dependent on the length of the structure; or
the use of claim 13, wherein the peak emissivity contrast is dependent on the length of at least one of the different types of structure.

15. The use of a composite for thermal camouflage, the composite comprising a plurality of structures formed of a material having a phase transition temperature T_{C};
wherein the emissivity εₕ of the composite at a wavelength λ is greater at a temperature below T_{C} than at a temperature exceeding Tc.
